# EUROPEAN PATENT SPECIFICATION

(11) **EP 4 374 692 B1**
(45) Date of publication and mention of the grant of the patent: **19.02.2025**
(21) Application number: 23210411.7
(22) Date of filing: 16.11.2023
(51) Int. Cl.: A01M 29/10

(54) **BIRD REPELLING DEVICE**
VORRICHTUNG ZUR VOGELABWEHR
DISPOSITIF DE DEFENSE CONTRE DES OISEAUX

(30) Priority: 23.11.2022 IT 202200024150
(43) Date of publication of application: 29.05.2024
(73) Proprietor: Progtech S.r.l., 24126 Bergamo (BG) (IT)
(72) Inventor: ROTTIGNI, Michele, 24020 RANICA (BG) (IT)
(74) Representative: Ripamonti, Enrico

(56) References cited:
- CN-U- 216 058 949
- US-A1- 2020 375 173

## Description

Forming an object of the present invention is a device for repelling birds from civil or industrial facilities according to the preamble of the main claim.

As known, the presence of birds (such as pigeons, for example) both in civil and industrial contexts often generates several problems: direct, related to the presence of faeces or parasites, for example; indirect, due to the possible presence of carcasses of dead animals, which attract animals of other species (such as for example, rats). Therefore, there often arises the need to repel such birds: this is for example obtained through fixed structures arranged along the cornices or windowsills of civil or non-civil facilities which prevent the birds from stationing thereon. Or, predator birds, such as hawks, which keep pigeons away, for example, from places where they gather, are used.

However, such known solutions are expensive, only repel the birds temporarily and do not allow to solve the problem in any case.

Also known are devices or lamps which emit light adapted to repel birds, such as seagulls. However, such lamps are not always effective towards the desired repelling.

CN216058949 describes a bird repellent device having a conical part on whose lateral surface there is arranged a plurality of sunlight reflectors. Such conical part is integrally joined with a base plate made of a material containing a cavity. Above the conical part there is present a lamp with multi-colour lights.

There is also present a sound generator and a support pipe with respect to which the conical part can rotate driven by the wind.

The conical part is covered by a glass cover.

US2020/0375173 discloses an indoor repellent device for parasites. It comprises a light source arranged in a casing rotating around an axis thanks to an actuator mechanism. The casing carries one or more light concentrator elements which allow the light generated by the light source to exit from the rotary casing. Such light source may be stationary, it may be arranged on the rotation axis of the casing or it may be associated with another fixed light source and arranged staggered with respect to the rotation axis of the casing.

The two sources may be fixed or rotary.

The repellent device is adapted to generate a light ring on surfaces for repelling unwanted insects.

An object of the present invention is to provide a bird repellent device which is effective and which has costs comparable to those of the prior art devices.

In particular, an object of the invention is to provide a device of the type mentioned above which is effective at repelling pigeons and which is easy to assemble in civil or industrial facilities.

A further object is to provide a device of the type mentioned above which is small in size so as to allow the simple storage and quick installation.

These and other objects which shall be apparent to the person skilled in the art are attained by a bird repellent device according to the attached claims.

For a better understanding of the present invention, the following drawings are attached hereto, purely by way of non-limiting example, wherein:
figure 1 shows a perspective view of a device according to the invention according to a first embodiment;
figure 2 shows a top view of the device of figure 1;
figure 3 shows a sectional view according to line 3-3 of figure 2;
figure 4 shows a lateral view of the device of figure 1; and
figure 5 shows a lateral view of a second embodiment of the device according to the invention.

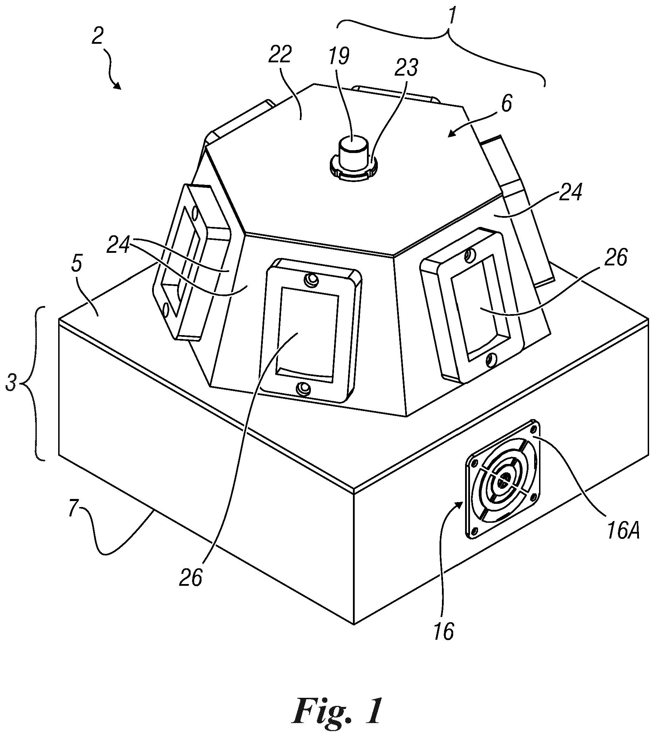

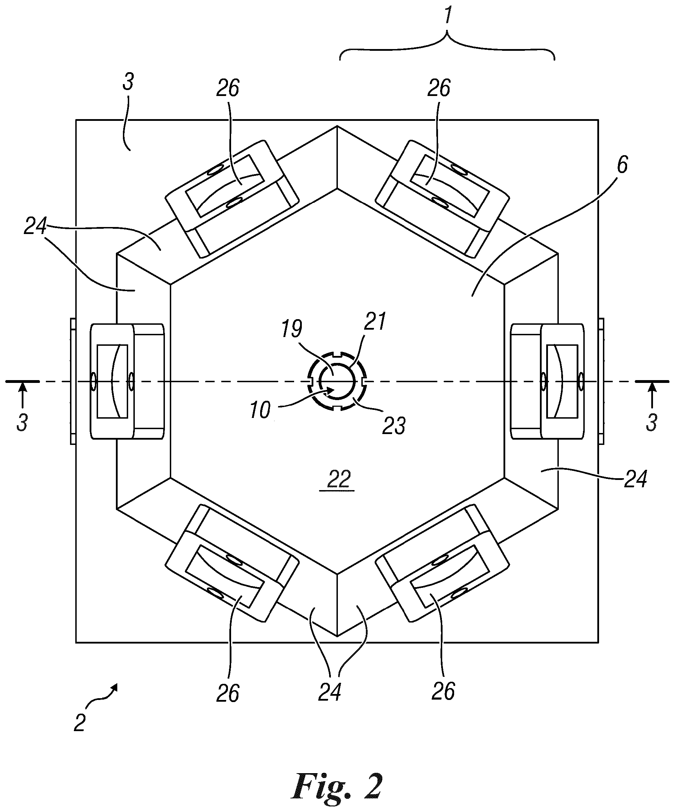

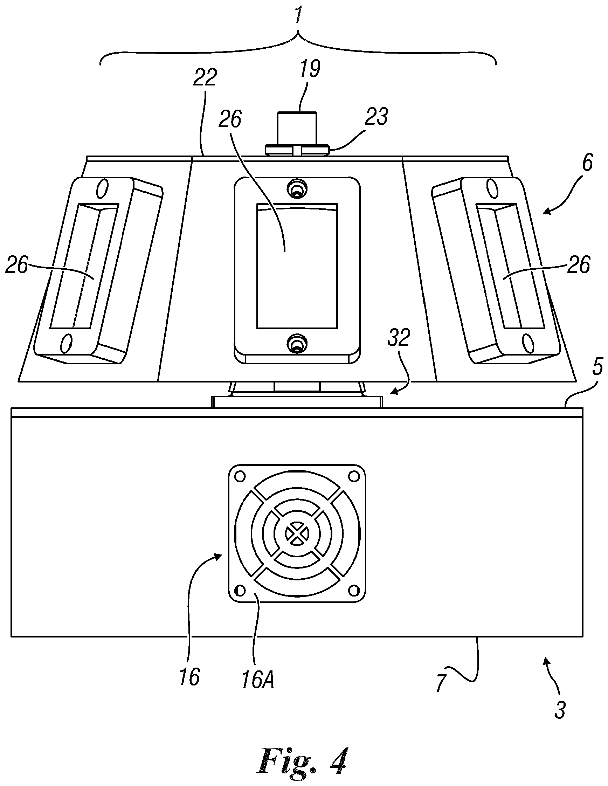

With reference to figures 1-4, they show a first embodiment of a bird repellent device 1 according to the invention.

Such device 1 comprises a body 2 having a base 3 adapted to be arranged on and fixed, height-wise, to a rest surface, such as a cornice, a shelf arranged at a height raised from the ground on a wall or equivalent member having a such support surface.

For example, said member provided with rest surface may be arranged, height-wise, on an inner wall of an industrial shed (for example a foundry) or it may be a cornice of such shed or other civil and industrial facility on which the birds perch (such as pigeons) especially in the colder seasons in search of heat.

The base 3 carries, at the upper part above a side 5 thereof, a hollow member 6. It should be observed that such base 3 has a rest side 7 opposite to the one 5 above which there is provided for the hollow member 6.

In the embodiment of the figures, such hollow member 6 (provided with an internal cavity 8 open at an end 8A thereof facing the side 5 of the base 3) is spaced from and rotates above the base 3. To this end, the hollow member 6 is integrally joined with a shaft 10 which extends into the cavity 8 and it is fixed to the output shaft 11 of an electric motor 12 fitted into the base 3.

A bearing 9 allows the rotation of the shaft in a hole 3A of the base 3. The shaft may rotate around an axis W driven by the motor 12, axis which is perpendicular to the side 5 of the base 3.

More particularly, also the base 3 is hollow in 13 and contains, in the embodiment shown in the figures by way of example, a bracket 15 adapted to support the electric motor 12 fixed to such bracket in any known manner inside the base 3.

In the sides 14 of the base 3 there are arranged fans 16 covered with grids 16A. The fans suction air into the base 3 and such air flows into the hollow member 6 following a predetermined path through the through holes or slots 5A obtained in the side 5 of the base.

In the cavity 8 of the hollow member 6, at a vacant end 18 distant from the output shaft 11, the shaft 10 has a collar 20 from which there rises a pin 19. The pin 19 penetrates into and protrudes from a through hole 21 of an end wall 22 of the hollow member 6, a wall which - in the embodiment of figures 1-4 - is flat-shaped. A ring nut 23 is arranged around the pin 19 on the wall 22 outside the hollow member 6, while the collar 20 is close to the hole 21, but inside such hollow member.

The end wall 22 is therefore sandwiched between the collar 20 and the ring nut 23 and it is therefore fixed to the rotary shaft 10.

In the embodiment of figures 1-4 such hollow member 6 is truncated pyramid-shaped, with inclined side walls 24 having openings 25 where lenses 26 are arranged. The walls therefore define the inclination of the lenses.

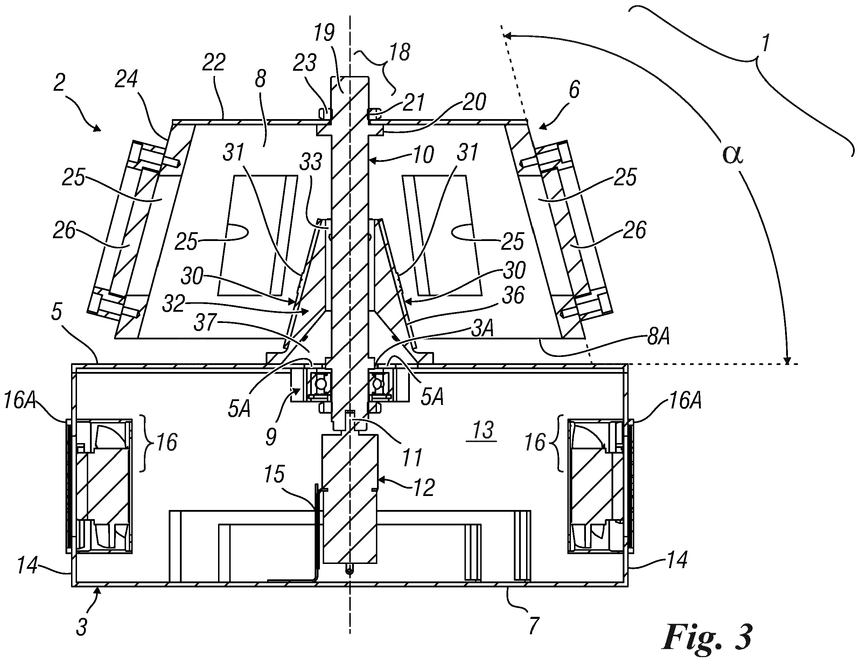

As observable in figure 3, in the hollow member 6 there are present means adapted to generate light 30. Such means adapted to generate light (or light generators) are light sources 31 preferably LED light sources fixed to a support 32 arranged around the shaft 10. Such support has a longitudinal axial cavity 33, it is fixed to the base 3, and it does not rotate around the axis W (perpendicular to the base 3) coincident with the longitudinal axis of the shaft 10 and of the output shaft (motor) 11; in the embodiment of figures, the support 32 is frusto-conical. In this manner, it has an inclined lateral outer wall 36 supporting the light sources 31.

At the lower part, the support 32 has a cavity 37, also with a conical development and widening towards the base 3. Such cavity is arranged above the slots 5A provided for in the side 5 of such base. In this manner, the air moved by the fans 16 passes from the base 3 to the longitudinal cavity 33 of the support 32 which is open on both of its opposite sides; therefore, the air flows out from the cavity 8 of the hollow member 6 so as to allow the cooling of the supports 32 of the light sources 31. Furthermore, passing through the hollow member 6, the air creates a positive pressure in its cavity 8 which does not allow the entry of dust through the lower opening 8A of such cavity which communicates with the space present between the hollow member 6 and the upper side 5 of the base 3.

The light sources 31 are therefore arranged inclined in the cavity 8 and they are faced towards side walls 24 of the hollow member 6 provided with the plurality of openings 25 on which the lenses 26 are arranged, for example flat-cylindrical shaped. Such lenses have the task of concentrating the light emitted by the light sources 31 along the cross-section thereof and creating a narrow and vertical light beam exiting from the hollow member 6.

Each of such lenses 26 has the effect of concentrating a circular light beam in the direction transversal to the lens and leaving it intact in the longitudinal direction.

Thanks to such lens, the rotation thereof around the light sources enables to obtain a homogeneous light emission in any case.

Furthermore, the position of each lens on an inclined surface, which may also have an inclination different from the support 32 of the light sources, allows to have a variable distance of the lenses from the light sources which also enables to obtain a variability in the cross-sectional dimension of the emitted beam.

It should be observed that the inclination of the lenses (comprised between 100° and 135° as shown by the angle α of figure 3) allows to generate a light beam in a fan-like fashion exiting from each lens that is a light beam which widens moving away from the lens 26 and which goes from the "horizon line" (or on a plane parallel to the side 5) up to a zenith point deriving from the shape and from the inclination of the lens. Such light beam has the effect of scaring birds which therefore move away from the cornice or shelf on which the device 1 is placed and from the surrounding areas.

Contributing to this end is also the rotation of the hollow member 6 around the axis W and the wavelength of the generated light, wavelength which is comprised between 460nm and 550nm. Such light and rotation emitted by the device 1 actually facilitates the disorientation of the birds creating a large area where the perching of the birds is prohibited.

The light may be coloured.

The rotation speed will be sufficiently low so as not to create a "visual fusion" effect in the visual system of the animals which therefore will not see a consistent lighting level but a plurality of lines in motion; therefore, the light emission will be with low intensity so as to create a sort of clearly visible flicker.

It should be observed that the electronic unit for controlling the device 1 is inserted into the base 3 (not shown) and the device 1 is preferably power-supplied from the power mains of the facility where it is placed. Obviously, it may be power-supplied by a battery.

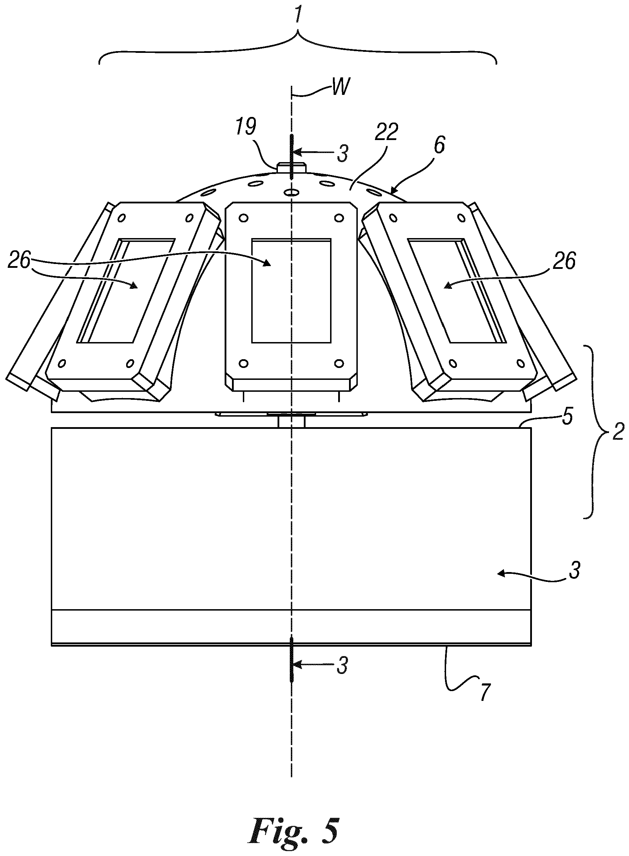

Figure 5 shows a variant of the invention.

In such figure, where parts corresponding to the one previously described in figures 1-4 are indicated using the same reference numerals, the device 1 still comprises a body 2 with a base 3 and a hollow member 6. However, unlike the previous embodiment, such hollow member 6 is spherical cap-shaped, with the end part 22 spoked. The lenses 26 are arranged above the corresponding openings 25 obtained in the spherical cap. Such lenses have an inclination thereof.

Also the variant of the device 1 of figure 5 is such to facilitate, for the operating modes thereof, the repelling of the birds, as described above regarding the device 1 of figures 1-4.

Two embodiments of the invention have been described. However, others may also be possible in the light of the description above: for example, it may be provided for that the hollow body 6 be stationary above the base 3 (and it may also form a single body with the latter), while the support 32 carrying at least one light source is integrally joined to the output shaft or motor 11 and rotates therewith. Also in this case there is the emission of a light beam from each lens 26 which acts as a deterrent to the perching of pigeons or other birds in the area where the device 1 is placed.

The invention is therefore defined by the scope of protection of the claims that follow.

## Claims

1. Device for repelling birds from civil and/or industrial facilities where said device (1) is mounted, the device (1) comprising a body (2) containing means (30) for generating light which is emitted by at least one opening (25) provided for in said body (2), the body (2) of the device comprising a base (3) above which there is arranged a hollow member (6) containing the light generation means (30), said hollow member (6) comprising at least one perimeter wall (24) in which there is provided the aforementioned opening (25), one of said hollow member (6) and said light generation means (30) being rotary with respect to said base (3) around a rotation axis (W) perpendicular to the base, on said opening (25) there being provided for a lens (26) adapted to generate a light beam which opens in a fan-like fashion exiting from said lens (26),
**characterised in that** the light generation means (30) are associated with a support (32) in the hollow member (6) and having an outer wall (36) supporting said light generation means (30) and a longitudinal axial cavity (33) open at the ends thereof, into which there penetrates a shaft (10), at the vacant end (18) of such shaft there being fixed the hollow member (6), into the base (3) there being provided for an electric motor (12) having an output drive shaft (11) alternatively fixed to one of said shaft (10) constrained to the hollow member and said support (32) for the light generation means (30), said electric motor (12) being adapted to drive the element constrained to the drive shaft around said rotation axis (W).

2. Device according to claim 1, **characterised in that** the other of said shaft (10) and said support (32) is fixed to the base (3).

3. Device according to claim 1, **characterised in that** the outer wall (36) of the support (32) for the light generation means (30) is inclined.

4. Device according to claim 1, **characterised in that** said base (3) is provided with a fan (16) and with an electronic unit for controlling the device.

5. Device according to claim 4, **characterised in that** said fan (16) is arranged at a respective side (14) of said base, the fan drawing air back into the base (3), a side (5) of the latter facing towards the hollow member (6) having openings (5A) adapted to allow the through-flow of air into an internal cavity (8) of the hollow member (6) for cooling the light generation means (30).

6. Device according to claim 5, **characterised in that** the fan is covered by a grid (16A) thereof.

7. Device according to claim 5, **characterised in that** the openings (5A) in the side (5) of the base open into a lower cavity (37) of the support (32) for the light generation means (30) connected to the axial cavity of said support (32).

8. Device according to claim 1, **characterised in that** the hollow member (6) is spherical cap-shaped.

9. Device according to claim 1, **characterised in that** the hollow member (6) is truncated pyramid-shaped.

10. Device according to claim 1, **characterised in that** an end wall (22) of the hollow member (6) comprises a through hole (21) through which the rotary shaft (10) passes, the latter comprising a collar (20) in proximity of said hole inside the hollow member and a pin (19) outside such member on which a ring nut (22) is arranged.

11. Device according to claim 1, **characterised in that** the light emitted by the light generation means (30) has a wavelength comprised between 460nm and 550nm.

12. Device according to claim 1, **characterised in that** the light is coloured.

13. Device according to claim 1, **characterised in that** the emitted light beam occupies an arc defined by an angle (α) comprised between 105° and 135°.

## Patentansprüche

1. Vorrichtung zum Abwehren von Vögeln von zivilen und/oder industriellen Gebäuden, an denen die Vorrichtung (1) montiert ist, die Vorrichtung (1) umfassend einen Körper (2), der Einrichtungen (30) zum Erzeugen von Licht enthält, das durch mindestens eine in dem Körper (2) bereitgestellte Öffnung (25) emittiert wird, der Körper (2) der Vorrichtung umfassend eine Basis (3), über der ein hohles Element (6) angeordnet ist, das die Lichterzeugungseinrichtungen (30) enthält, das hohle Element (6) umfassend mindestens eine Umfangswand (24), in der die vorstehend genannte Öffnung (25) bereitgestellt ist, wobei eines von dem hohlen Element (6) und den Lichterzeugungseinrichtungen (30) in Bezug auf die Basis (3) um eine Drehachse (W) senkrecht zu der Basis drehbar ist, wobei an der Öffnung (25) eine Linse (26) bereitgestellt ist, die angepasst ist, um einen Lichtstrahl zu erzeugen, der sich beim Austreten aus der Linse (26) fächerartig öffnet, **dadurch gekennzeichnet, dass** die Lichterzeugungseinrichtungen (30) mit einem Träger (32) in dem hohlen Element (6) assoziiert sind, und der eine Außenwand (36), die die Lichterzeugungseinrichtungen (30) trägt, und einen längsaxialen Hohlraum (33), der an seinen Enden offen ist und in den eine Welle (10) eindringt, aufweist, wobei an dem freien Ende (18) solcher Welle das hohle Element (6) befestigt ist, wobei in der Basis (3) ein Elektromotor (12) bereitgestellt ist, der eine Abtriebswelle (11) aufweist, die alternativ an einem von der Welle (10), die mit dem hohlen Element verbunden ist, und dem Träger (32) für die Lichterzeugungseinrichtungen (30) befestigt ist, wobei der Elektromotor (12) angepasst ist, um das an der Antriebswelle verbundene Element um die Drehachse (W) anzutreiben.

2. Vorrichtung nach Anspruch 1, **dadurch gekennzeichnet, dass** das andere von der Welle (10) und dem Träger (32) an der Basis (3) befestigt ist.

3. Vorrichtung nach Anspruch 1, **dadurch gekennzeichnet, dass** die Außenwand (36) des Trägers (32) für die Lichterzeugungseinrichtungen (30) geneigt ist.

4. Vorrichtung nach Anspruch 1, **dadurch gekennzeichnet, dass** die Basis (3) mit einem Lüfter (16) und mit einer elektronischen Einheit zum Steuern der Vorrichtung versehen ist.

5. Vorrichtung nach Anspruch 4, **dadurch gekennzeichnet, dass** der Lüfter (16) auf einer entsprechenden Seite (14) der Basis angeordnet ist, wobei der Lüfter Luft zurück in die Basis (3) ansaugt, wobei eine dem Hohlkörper (6) zugewandte Seite (5) des Letzteren Öffnungen (5A) aufweist, die angepasst sind, um den Durchfluss von Luft in einen inneren Hohlraum (8) des hohlen Elements (6) zum Kühlen der Lichterzeugungseinrichtungen (30) zu ermöglichen.

6. Vorrichtung nach Anspruch 5, **dadurch gekennzeichnet, dass** der Lüfter durch ein Gitter (16A) davon abgedeckt ist.

7. Vorrichtung nach Anspruch 5, **dadurch gekennzeichnet, dass** die Öffnungen (5A) auf der Seite (5) der Basis in einen unteren Hohlraum (37) des Trägers (32) für die mit dem axialen Hohlraum des Trägers (32) verbundenen Lichterzeugungseinrichtungen (30) münden.

8. Vorrichtung nach Anspruch 1, **dadurch gekennzeichnet, dass** das hohle Element (6) kugelkappenförmig ist.

9. Vorrichtung nach Anspruch 1, **dadurch gekennzeichnet, dass** das hohle Element (6) pyramidenstumpfförmig ist.

10. Vorrichtung nach Anspruch 1, **dadurch gekennzeichnet, dass** eine Endwand (22) des hohlen Elements (6) ein Durchgangsloch (21) umfasst, durch das die Drehwelle (10) verläuft, wobei letztere einen Bund (20) in der Nähe des Lochs im Inneren des hohlen Elements und einen Stift (19) außerhalb dieses Elements aufweist, auf dem eine Ringmutter (22) angeordnet ist.

11. Vorrichtung nach Anspruch 1, **dadurch gekennzeichnet, dass** das von den Lichterzeugungseinrichtungen (30) emittierte Licht eine Wellenlänge zwischen 460 nm und 550 nm aufweist.

12. Vorrichtung nach Anspruch 1, **dadurch gekennzeichnet, dass** das Licht farbig ist.

13. Vorrichtung nach Anspruch 1, **dadurch gekennzeichnet, dass** der emittierte Lichtstrahl einen Bogen einnimmt, der durch einen Winkel (α) zwischen 105° und 135° definiert ist.

## Revendications

1. Dispositif destiné à repousser les oiseaux autour des installations civiles et/ou industrielles où ledit dispositif (1) est monté, le dispositif comprenant un corps (2) contenant des moyens de génération de lumière (30) qui est émis par au moins une ouverture (25) prévue dans ledit corps (2), le corps (2) du dispositif comprenant une base (3) au-dessus de laquelle est disposé un élément creux (6) contenant lesdits moyens de génération de lumière (30), ledit élément creux (6) comprenant au moins une paroi périphérique (24) dans laquelle est ménagée l'ouverture (25) mentionnée ci-dessus, l'un desdits élément creux (6) et lesdits moyens de génération de lumière (30) étant rotatifs par rapport à ladite base (3) autour d'un axe de rotation (W) perpendiculaire à la base, sur ladite ouverture (25) est ménagée une lentille (26) pouvant générer un faisceau lumineux qui s'ouvre en forme de ventilateur à la sortie de ladite lentille (26), **caractérisé en ce que** les moyens de génération de lumière (30) sont associés à un support (32) dans l'élément creux (6) et ont une paroi extérieure (36) supportant lesdits moyens de génération de lumière (30) et une cavité axiale longitudinale (33) ouverte à ses extrémités, dans laquelle pénètre un arbre (10), l'élément creux (6) étant fixé à l'extrémité libre (18) de cet arbre, dans la base (3) est prévu un moteur électrique (12) ayant un arbre d'entraînement de sortie (11) fixé alternativement à l'un dudit arbre (10) fixé solidement à l'élément creux et audit support (32) pour les moyens de génération de lumière (30), ledit moteur électrique (12) étant adapté pour entraîner l'élément solidement fixé à l'arbre d'entraînement autour dudit axe de rotation (W).

2. Dispositif selon la revendication 1, **caractérisé en ce que** l'autre entre ledit arbre (10) et ledit support (32) est fixé à la base (3).

3. Dispositif selon la revendication 1, **caractérisé en ce que** la paroi extérieure (36) du support (32) des moyens de génération de lumière (30) est inclinée.

4. Dispositif selon la revendication 1, **caractérisé en ce que** ladite base (3) est pourvue d'un ventilateur (16) et d'une unité électronique de commande du dispositif.

5. Dispositif selon la revendication 4, **caractérisé en ce que** ledit ventilateur (16) est disposé sur un côté respectif (14) de ladite base, le ventilateur aspirant l'air à l'intérieur de la base (3), un côté (5) de cette dernière orientée vers l'élément creux (6) présentant des ouvertures (5A) adaptées pour permettre le passage de l'air dans une cavité interne (8) de l'élément creux (6) aux fins de refroidissement des moyens de génération de lumière (30).

6. Dispositif selon la revendication 5, **caractérisé en ce que** le ventilateur est recouvert d'une grille (16A).

7. Dispositif selon la revendication 5, **caractérisé en ce que** les ouvertures (5A) sur le côté (5) de la base débouchent dans une cavité inférieure (37) du support (32) pour les moyens de génération de lumière (30) reliés à la cavité axiale dudit support (32).

8. Dispositif selon la revendication 1, **caractérisé en ce que** l'élément creux (6) se présente sous la forme d'une calotte sphérique.

9. Dispositif selon la revendication 1, **caractérisé en ce que** l'élément creux (6) se présente sous la forme d'une pyramide tronquée.

10. Dispositif selon la revendication 1, **caractérisé en ce qu'**une paroi d'extrémité (22) de l'élément creux (6) comporte un trou débouchant (21) par lequel passe l'arbre rotatif (10), ce dernier comportant un collier (20) à proximité dudit trou à l'intérieur de l'élément creux et un axe (19) à l'extérieur de cet élément sur lequel est disposée un écrou-raccord (22).

11. Dispositif selon la revendication 1, **caractérisé en ce que** la lumière émise par les moyens de génération de lumière (30) a une longueur d'onde comprise entre 460nm et 550nm.

12. Dispositif selon la revendication 1, **caractérisé en ce que** la lumière est colorée.

13. Dispositif selon la revendication 1, **caractérisé en ce que** le faisceau de lumière émis occupe un arc défini par un angle (α) compris entre 105° et 135°.
